# EUROPEAN PATENT SPECIFICATION

(11) **EP 3 839 824 B1**
(45) Date of publication and mention of the grant of the patent: **08.11.2023**
(21) Application number: 21161971.3
(22) Date of filing: 11.03.2021
(51) Int. Cl.: G06V 10/774, G06V 10/82, G06N 3/045, G06N 3/047, G06N 3/08

(54) **METHOD AND APPARATUS FOR GENERATING IMAGE, DEVICE, MEDIUM AND PROGRAM**
VERFAHREN UND EINRICHTUNG ZUR ERZEUGUNG VON BILDERN, VORRICHTUNG, MEDIUM UND PROGRAMM
PROCÉDÉ ET APPAREIL DE GÉNÉRATION D'IMAGE, DISPOSITIF D'ENREGISTREMENT ET PROGRAMME

(30) Priority: 08.06.2020 CN 202010514466
(43) Date of publication of application: 23.06.2021
(73) Proprietor: Beijing Baidu Netcom Science and Technology Co., Ltd., Beijing 100085 (CN)
(72) Inventor: Liu, Jiaming, Beijing, Beijing 100085 (CN); Hu, Tianshu, Beijing, Beijing 100085 (CN); He, Shengyi, Beijing, Beijing 100085 (CN); Hong, Zhibin, Beijing, Beijing 100085 (CN)
(74) Representative: Nederlandsch Octrooibureau

(56) References cited:
- Radford Alec ET AL: "Unsupervised Representation Learning with Deep Convolutional Generative Adversarial Networks", , 7 January 2016 (2016-01-07), pages 1-16, XP055786755, Retrieved from the Internet: URL:https://arxiv.org/pdf/1511.06434.pdf [retrieved on 2021-03-17]
- GIOVANNI MARIANI ET AL: "BAGAN: Data Augmentation with Balancing GAN", ARXIV.ORG, CORNELL UNIVERSITY LIBRARY, 201 OLIN LIBRARY CORNELL UNIVERSITY ITHACA, NY 14853, 26 March 2018 (2018-03-26), XP081236504,
- SUDIPTO MUKHERJEE ET AL: "ClusterGAN : Latent Space Clustering in Generative Adversarial Networks", ARXIV.ORG, CORNELL UNIVERSITY LIBRARY, 201 OLIN LIBRARY CORNELL UNIVERSITY ITHACA, NY 14853, 11 September 2018 (2018-09-11), XP081189609,

## Description

### TECHNICAL FIELD

Embodiments of the present disclosure relate to the image processing technology, specifically to the field of artificial intelligence deep learning and image processing, and more specifically to a method and apparatus for generating an image, a device, a medium and a program.

### BACKGROUND

With the rapid development of machine learning technology, the machine learning technology is more and more widely applied in all walks of life due to its own advantages.

When the machine learning technology is applied to the field of image processing, it is generally required to acquire a large number of classified images as sample data to be used for training a neural network model, such that the neural network model has an image processing capability.

Therefore, how to acquire a classified image becomes a technical problem urgently to be solved when the machine learning technology is applied to the field of image processing.
Document "Unsupervised Representation Learning with Deep Convolutional Generative Adversarial Networks", 7 January 2016 (2016-01-07), pages 1-16, describes that generative adversarial network generates an image by using vectors.

"BAGAN: Data Augmentation with Balancing GAN", ARXIV.ORG, CORNELL UNIVERSITY LIBRARY, 201 OLIN LIBRARY CORNELL UNIVERSITY ITHACA, NY 14853, 26 March 2018 (2018-03-26), describes a class-conditional latent vector generator, which takes a class label as an input and returns a latent vector as an output.

### SUMMARY

The invention is set out in the appended set of claims.

According to the technology of the present disclosure, the problem that it is difficult to acquire the classified image is solved.

Other features of the present disclosure will be easily understood through the following description.

### BRIEF DESCRIPTION OF THE DRAWINGS

Accompanying drawings are used for a better understanding of the scheme, and do not constitute a limitation to the present disclosure, where
Fig. 1a is a flowchart of a method for generating an image according to an embodiment of the present disclosure;
Fig. 1b is a training structure diagram of a stylegan according to an embodiment of the present disclosure;
Fig. 2 is a flowchart of another method for generating an image according to an embodiment of the present disclosure;
Fig. 3a is a flowchart of another method for generating an image according to an embodiment of the present disclosure;
Fig. 3b is a flowchart of an acquisition of a trained image-to-image translation model according to an embodiment of the present disclosure;
Fig. 4 is a schematic structural diagram of an apparatus for generating an image according to an embodiment of the present disclosure; and
Fig. 5 is a block diagram of an electronic device adapted to implement a method for generating an image according to embodiments of the present disclosure.

### DETAILED DESCRIPTION OF EMBODIMENTS

Exemplary embodiments of the present disclosure are described below in combination with the accompanying drawings, and various details of the embodiments of the present disclosure are included in the description to facilitate understanding, and should be considered as exemplary only. Also, for clarity and conciseness, descriptions for well-known functions and structures are omitted in the following description.

According to the embodiments of the present disclosure, the present disclosure provides a method for generating an image.

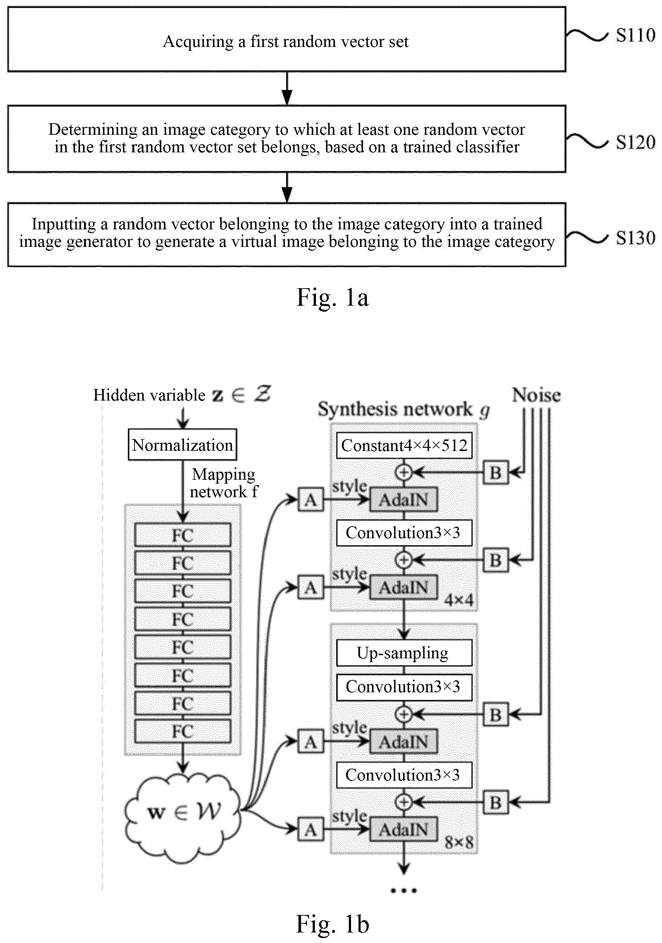

As shown in Fig. 1a, Fig. 1a is a flowchart of a method for generating an image according to an embodiment of the present disclosure. This embodiment is applicable to a scenario where an image clearly classified is acquired. The method may be performed by an apparatus for generating an image. The apparatus may be implemented by software and/or hardware, and may be generally integrated in an electronic device having a computing capability such as a computer or a mobile phone.

Specifically, referring to Fig. 1a, the method includes the following steps S110 to S130.

S 110 includes acquiring a first random vector set.

In the process of applying the machine learning technology to the field of image processing, and specifically when supervised training is performed on a neural network model, it is usually required to acquire a large number of classified high-quality images. An implementation is to directly use an existing public data set. In this implementation, the image data in the public data set is limited and cannot be adapted to various actual production environments, resulting in a poor actual effect. Another implementation is to collect high-quality image data first, and then perform manual classification and labeling. In this implementation, not only is it difficult to acquire a large amount of high-quality data, but the cost of the manual labeling is high.

For the above problems, according to this embodiment, a large number of high-quality images that are clearly classified are generated by using a classifier and an image generator together.

Specifically, the first random vector set is acquired first. Here, the first random vector set may include at least one random vector, and each random vector may be used to ultimately generate a corresponding virtual image. As an example, the approach of acquiring the first random vector set includes, but not limited to, sampling a randomly generated multi-dimensional preset distribution to obtain at least one multi-dimensional random vector, and constituting the first random vector set by the at least one multi-dimensional random vector. Here, the preset distribution may be, for example, a uniform distribution or a normal distribution, and is not limited herein. In a practical example, a 512-dimensional hidden variable Z may be sampled in a randomly generated 512-dimensional uniform distribution to be used as a random vector, thereby constituting the first random vector set.

S120 includes determining an image category to which at least one random vector in the first random vector set belongs, based on a trained classifier.

In this embodiment, the classifier is a model that is obtained by training a preset initial classification model and has an image classification function. Specifically, the at least one random vector in the first random vector set is inputted into the classifier, such that the classifier classifies the random vector according to a preset image category at the time of training, and thus determines the image category to which the inputted random vector belongs. Here, the classifier may be a binary classifier or a multi-classifier, which is not limited here.

The method further includes: acquiring a second random vector set; inputting at least one random vector in the second random vector set into a trained image generator to generate at least one to-be-labeled virtual image; classifying and labeling the random vector according to the to-be-labeled virtual image and a preset image category, to obtain a random vector sample having a classification label; and training a preset classification model using the random vector sample having the classification label, to obtain the trained classifier.

Here, the approach of acquiring the second random vector set includes, but not limited to, sampling a randomly generated multi-dimensional preset distribution to obtain at least one multi-dimensional random vector, and constituting the second random vector set by using the at least one multi-dimensional random vector or by using a random vector obtained through inputting the multi-dimensional random vector into a plurality of fully connected layers (FC layers). Taking a practical example, a 512-dimensional hidden variable Z may be sampled from a randomly generated 512-dimensional uniform distribution as a random vector, or the hidden variable Z is changed into an 8*512-dimensional W through passing through a series of FC layers as a random vector, thereby constituting the second random vector set.

Specifically, in the process of training the classifier, the random vector included in the second random vector set is first inputted into the trained image generator to generate and obtain a virtual image corresponding to the inputted random vector. The virtual image is an image of which the image category is not determined, that is, a to-be-labeled virtual image. Then, the to-be-labeled virtual image is classified according to the preset image category, and a random vector corresponding to the to-be-labeled virtual image is labeled according to the image category to which the to-be-labeled virtual image belongs, to obtain a random vector sample having a classification label. Here, in a binary classification, the preset image category may be pre-defined domain A and domain B. For example, when an image is a face image, domain A may be "adult" and domain B may be "child," or domain A may be "young person" and domain B may be "old person," which is not limited here. The approach of performing classification and labeling includes, but not limited to, manual classification and manual labeling. If the to-be-labeled virtual image is manually divided to belong to domain A, the random vector for generating the to-be-labeled virtual image is labeled as domain A. Then, the preset classification model is trained using the random vector sample having the classification label, and the classification model is determined as the trained classifier when the model is converged. Here, if the preset image category refers to two categories, the preset classification model may be a binary classification model, for example, a linear classifier linear SVM (support vector machine). If the preset image category refers to a plurality of categories, the preset classification model may alternatively be other multi-classification model, which is not limited here.

Taking the binary classification as an example, the process of training a classifier is described below by way of a practice example. About 5000 hidden variables Z are sampled from a randomly generated uniform distribution, and each Z generates a face image sample using a trained image generator. In the 5000 face image samples, a labeling personnel distinguishes an image belonging to domain A from an image belonging to domain B according to predefined domain A and domain B. After the image data of the two domains is obtained, supervised training may be performed on a linear SVM using a random variable sample corresponding to the image data of the two domains, to enable the linear SVM to classify the hidden variables Z according to domain A or domain B, to obtain the trained classifier.

The advantage of training the classifier using the random vector is that the training process is simple, which can reduce the model training complexity, and the model is easier to be converged, and fewer training samples are required.

Alternatively, a number of random vectors in the first random vector set is greater than a number of random vectors in the second random vector set.

In this embodiment, the number of the random vectors in the second random vector set may be set to be much smaller than the number of the random vectors in the first random vector set. The advantage of such a setting lies in that only a small number of random vector samples need to be labeled when the classifier is trained. Accordingly, the trained classifier and the trained image generator may be used to infinitely generate a large number of virtual images that are clearly classified, and thus, the image classification process may be simplified, thereby reducing the image classification cost and improving the image diversity.

S 130 includes inputting a random vector belonging to the image category into a trained image generator to generate a virtual image belonging to the image category.

In this embodiment, after the image category to which the at least one random vector in the first random vector set belongs is determined, a random vector belonging to a target image category may be inputted into the trained image generator respectively, to generate a virtual image belonging to the target image category correspondingly. As an example, if the first random vector set includes a plurality of random vectors, random vectors belonging to multiple image categories may be inputted into the trained image generator respectively, and virtual images belonging to respective image categories may be outputted.

Here, the image generator may be a model that is obtained by training a preset initial generation model and has an image generation function. Specifically, a random vector is inputted into the trained image generator, and a virtual image corresponding to the random vector may be outputted and obtained. Here, the virtual image is an image generated by learning a real image by the image generator, which does not exist in reality.

Alternatively, the method further includes: acquiring a sample image data set, the sample image data set including a plurality of real images having no classification label; and performing unsupervised training on a first generative adversarial network using the sample image data set to obtain the trained image generator.

In the process of training the image generator, a sample image data set composed of a plurality of real images may be used as a training sample to perform the unsupervised training on the first generative adversarial network. Here, the real image included in the sample image data set may be a high definition image, and the sample image data set may be, for example, an existing public data set. In addition, the first generative adversarial network may be, for example, a style-based generative adversarial network (stylegan), and the stylegan is trained using a high-definition sample image data set to obtain an image generator, and the virtual image generated by the image generated is also a high-definition image.

In a specific example, referring to the training structure of the stylegan shown in Fig. 1b, the process of training the image generator includes the following steps. A 512-dimensional hidden variable Z is sampled in a 512-dimensional uniform distribution, Z is changed into an 8*512-dimensional W after passing through a series of FC layers on the left of the figure, W is divided into beta and gamma parameters for four AdaIN layers, which are used as an image manner or style and are sent into a synthesis network g in the middle of the figure, and the right of the figure is randomly sampled noise (Noise), the dimension of which is consistent with a feature map after a convolution. The convolution input of g is a blank graph, and a random RGB graph is generated after the blank graph passes through the g network controlled by W and Noise. During training, a PGGAN training strategy may be adopted. The PGGAN training strategy is specifically as follows. A generator in the stylegan is first trained to generate an output image of a 4*4 size, and a discriminator in the stylegan performs discrimination on the image of the 4*4 size. After a convergence, a convolutional block is superimposed on the 4*4 size. In this embodiment, a convolutional block may consist of two AdaIN layers, and the output of the convolutional block is an 8*8 image, and the discriminator of the same size performs the discrimination at this size. This step is cyclically superimposed until the size of the generated image reaches 1024* 1024, and the converged stylegan is taken as the trained image generator.

In the process of training the image generator, the beneficial effect of the performing unsupervised training on a first generative adversarial network using the sample image data set is that the classification and labeling for the sample image may be avoided, thereby reducing the labeling cost of the sample image while ensuring the image quality.

According to the technical solution in this embodiment, the first random vector set is acquired. The image category to which the at least one random vector in the first random vector set belongs is determined based on the trained classifier. The random vector belonging to the image category is inputted into the trained image generator to generate the virtual image belonging to the image category. The problem in the existing technology that it is difficult to acquire an image that is clearly classified is solved by using the advantage of using the classifier and the image generator together. Accordingly, the automatic generation of a large number of images that are clearly classified is implemented, and at the same time, the image diversity is improved and the cost of the image classification is reduced.

According to an embodiment of the present disclosure, the present disclosure further provides a method for generating an image.

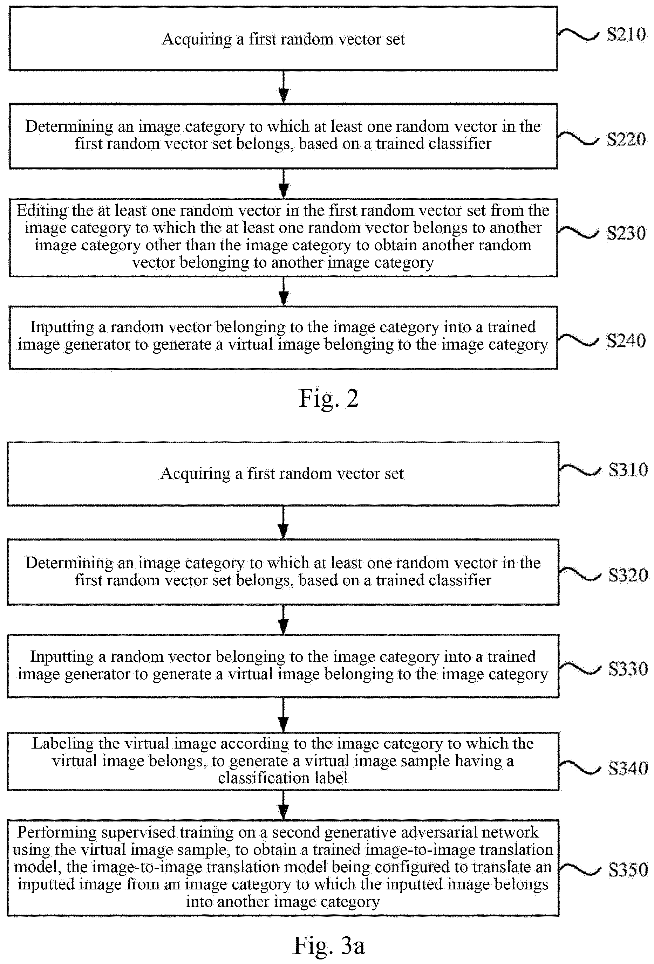

As shown in Fig. 2, Fig. 2 is a flowchart of another method for generating an image according to an embodiment of the present disclosure. This embodiment is specified for any of the above embodiments. Before the inputting a random vector belonging to the image category into a trained image generator to generate a virtual image belonging to the image category, the method is specified to include: editing the at least one random vector in the first random vector set from the image category to which the at least one random vector belongs to an image category other than the image category to obtain another random vector belonging to other image category.

Specifically, referring to Fig. 2, the method includes the following steps S210 to S240.

S210 includes acquiring a first random vector set.

S220 includes determining an image category to which at least one random vector in the first random vector set belongs, based on a trained classifier.

S230 includes editing the at least one random vector in the first random vector set from the image category to which the at least one random vector belongs to another image category other than the image category to obtain other random vector belonging to the another image category.

On the basis of the above embodiment, in this embodiment, in order to make numbers of generated virtual images corresponding to respective image categories equal, after the at least one random vector in the first random vector set is classified using the classifier, a random vector under each image category may further be edited to the other image category to obtain a corresponding random vector under the other image category, which implements that numbers of random vectors under respective image categories are equal, and thus, the numbers of the virtual images generated according to the random vectors under respective image categories are also equal.

For example, if a random vector a₁ belongs to an image category A and random vectors b₁ and c₁ belong to an image category B, the random vector a₁ may be edited from the image category A to the image category B to obtain a corresponding random vector a₂ belonging to the image category B. The random vector bi may be edited from the image category B to the image category A to obtain a corresponding random vector b₂ belonging to the image category A. Meanwhile, the random vector c₁ may be edited from the image category B to the image category A to obtain a corresponding random vector c₂ belonging to the image category A. That is, after the editing, the image category A correspondingly includes a₁, b₂ and c₂, and the image category B correspondingly includes a₂, b₁, and c₁, and thus, the image category A and the image category B each include three random vectors, thereby achieving a balance in quantity.

Alternatively, the editing the at least one random vector in the first random vector set from the image category to which the at least one random vector belongs to another image category other than the image category to obtain other random vector belonging to the another image category includes: acquiring an attribute vector axis of an image category space corresponding to an image generator, the attribute vector axis referring to a normal vector of a classification plane corresponding to any two image categories in the image category space; and editing, according to the attribute vector axis, the at least one random vector in the first random vector set from the image category to which the at least one random vector belongs to another image category other than the image category, to obtain other random vector belonging to the another image category.

As an example, the attribute vector axis may be a vector axis for changing an image category to which a random vector belongs in the image category space corresponding to the image generator. Here, the image category space may be a plurality of spaces divided by a classification plane between the image categories. Taking a binary classification as an example, two parameters of the classifier may determine one classification plane, of which the normal vector is the attribute vector axis in the space of the image generator. When there are a plurality of image categories, there may also be a plurality of attribute vector axes correspondingly. That is, every two image categories may correspond to one attribute vector axis.

Specifically, through at least one attribute vector axis, the random vector in the first random vector set may be edited from the image category to which the random vector belongs to another image category other than the image category, to obtain other random vector belonging to the another image category corresponding to the attribute vector axis.

The advantage of editing the random vector from the image category to which the random vector belongs to another image category other than the image category by using the attribute vector axis is that, the numbers of the random vectors corresponding to respective image categories may be equal, and thus, the numbers of the generated virtual images corresponding to respective image categories are equal. Accordingly, the balance of the image sample data of respective categories is improved when the virtual images are used as a training sample in supervised training, thereby achieving a better training effect.

Alternatively, the editing, according to the attribute vector axis, the at least one random vector in the first random vector set from the image category to which the at least one random vector belongs to another image category other than the image category to obtain other random vector belonging to the another image category includes: adding a product of the attribute vector axis and an edit scale parameter to a random vector belonging to a first image category, to obtain a random vector belonging to a second image category; and/or subtracting the product of the attribute vector axis and the edit scale parameter from the random vector belonging to the second image category, to obtain the random vector belonging to the first image category. Here, the attribute vector axis is pointed from the image category space corresponding to the first image category to the image category space corresponding to the second image category.

In a practical example, the attribute vector axis is a normal vector of a classification plane between the first image category and the second image category. When the normal vector is pointed from the image category space corresponding to the first image category to the image category space corresponding to the second image category, the random vector belonging to the first image category may be edited to the second image category by adding the attribute vector axis multiply λ to the random vector belonging to the first image category, and the random vector belonging to the second image category may be edited to the first image category by subtracting the attribute vector axis multiply λ from the random vector belong to the second image category. Here, λ refers to an edit scale parameter for determining the editing degree of a random vector. The larger λ is, the deeper the editing degree is, and λ may be specifically set as required.

In this embodiment, the random vector belonging to the first image category is edited to the second image category through the attribute vector axis, and vice versa. The advantage of such a setting is that the numbers of the random vectors corresponding to respective image categories may be equal, and thus the numbers of the generated virtual images corresponding to respective image categories are equal. Accordingly, the balance of the image sample data of the categories is improved when the virtual images are used as the training sample in the supervised training, thereby achieving a better training effect.

S240 includes inputting a random vector belonging to the image category into a trained image generator to generate a virtual image belonging to the image category.

According to the technical solution in this embodiment, on the basis of the above embodiment, after the at least one random vector in the first random vector set is classified using the classifier, the random vector under each image category is edited to the other image category to obtain the corresponding random vector under the other image category. Accordingly, the numbers of the random vectors under respective image categories are equal, and thus, the numbers of the virtual images generated according to the random vectors under respective image categories are also equal, thereby improving the balance of the image sample data of the categories.

According to an embodiment of the present disclosure, the present disclosure further provides a method for generating an image.

As shown in Fig. 3a, Fig. 3a is a flowchart of another method for generating an image according to an embodiment of the present disclosure. This embodiment specify any of the above embodiments. After inputting a random vector belonging to the image category into a trained image generator to generate a virtual image belonging to the image category, the method is specified to include: labeling the virtual image according to the image category to which the virtual image belongs, to generate a virtual image sample having a classification label; and performing supervised training on a second generative adversarial network using the virtual image sample, to obtain a trained image-to-image translation model, the image-to-image translation model being configured for translating an inputted image from an image category to which the inputted image belongs into an image of another image category.

Specifically, referring to Fig. 3a, the method includes the following steps S310 to S350.

S310 includes acquiring a first random vector set.

S320 includes determining an image category to which at least one random vector in the first random vector set belongs, based on a trained classifier.

S330 includes inputting a random vector belonging to the image category into a trained image generator to generate a virtual image belonging to the image category.

S340 includes labeling the virtual image according to the image category to which the virtual image belongs, to generate a virtual image sample having a classification label.

A face attribute edit function is widely applied in short videos and live streaming videos, and has a great practical value. In the process of training, a face editing model needs a large number of classified high-quality images, and the quality and quantity of the images significantly affect the image edit effect of the final trained model. The image involved in this embodiment may be a face image, and a face attribute editing model may be an image-to-image translation model.

For example, after virtual images belonging to respective image categories are generated, the virtual images of the respective image categories may further be labeled according to the image category to which the virtual image belongs, and then the virtual image sample having the classification label is generated. Here, the specific labeling approach may be, for example, using a different character or number to differently label a virtual image of a different image category, which is not limited here.

S350 includes performing supervised training on a second
generative adversarial network using the virtual image sample, to obtain a trained image-to-image translation model, the image-to-image translation model being configured for translating an inputted image from an image category to which the inputted image belongs into an image of another image category.

Specifically, the second generative adversarial network may be directly trained using the above generated virtual image sample having the classification label, to obtain the trained image-to-image translation model. Here, the second generative adversarial network may be, for example, cyclegan, preferably a UGATIT architecture. The advantage of adopting the UGATIT architecture is that a more stable translation effect may be achieved. Specifically, for the problem of the conversion between two domains (domain A and domain B) when there are only two image categories, the image-to-image translation model consists of two generators (A2B and B2A) and two discriminators (A and B). A generator is responsible for generating a realistic fake image to deceive the discriminators; and a discriminator is responsible for discriminating the fake image.

Here, the operation principle of the image-to-image translation model is as follows. At a generator side, a feature map x having C channels may be obtained after the inputted image passes through an encoder composed of two down-sampling convolutions and four cross-layer connection blocks, a 2C-dimensional feature is obtained after max pooling and average pooling are performed on x, and the 2C-dimentional feature is input into an auxiliary classifier to determine that the image source is A or B. After the weight W of the auxiliary classifier is obtained, a vector multiplication is performed on the weight W and the 2C-channel feature of each pixel point on the x to obtain an attention heat map a. The heat map a is multiplied by x to obtain a weighted feature map x', and two vectors beta and gamma are obtained after x' passes through a fully convolutional network. A decoder is composed of an AdaLIN-based adaptive residual block (ARB) and an up-sampling layer. ARB accepts x' as an input of a convolution, and the AdaLIN layer accepts beta and gamma for feature modulation. After x' passes through ARB and the up-sampling layer, the translated image is outputted.

When supervised training is performed on the UGATIT architecture, a discriminator side is also required. Specifically, the discriminator side may obtain the weighted feature map x' by passing the image translated and obtained by the generator through an encoder similar to the generator. After x' passes through the convolution and sigmoid, the output that the image is real or fake is generated. When the discriminator is trained, the discriminator needs to minimize a classification loss function (loss), and when the generator is trained, the generator needs to maximize the classification loss, which are synthesized as an adversarial loss. Here, the loss function required in the training of the UGATIT architecture (i.e., the overall loss in the training of the generator) includes three kinds of losses: 1) the adversarial loss as described above; 2) a cycle consistency loss, that is, a loss (e.g., an L1 loss or an L2 loss) between a generated image and an inputted image after an image passes through the A2B and B2A translations; and 3) a self-invariant loss, that is, a loss (e.g., an L1 loss or an L2 loss) between a generated image and an inputted image when an image is mapped back to the domain of the image itself.

According to the technical solution in this embodiment, on the basis of the above embodiments, the generated virtual image is labeled according to the image category to which the virtual image belongs to generate the virtual image sample having the classification label. The supervised training is performed on the second generative adversarial network using the virtual image sample, to obtain the trained image-to-image translation model. In the process of training the image-to-image translation model to which the generated virtual image sample having the classification label is applied, a large amount of manual labeling is no longer required for the sample image during model training, thereby reducing the cost of the labeling for the image sample and improving the model training efficiency, while improving the diversity of the sample image.

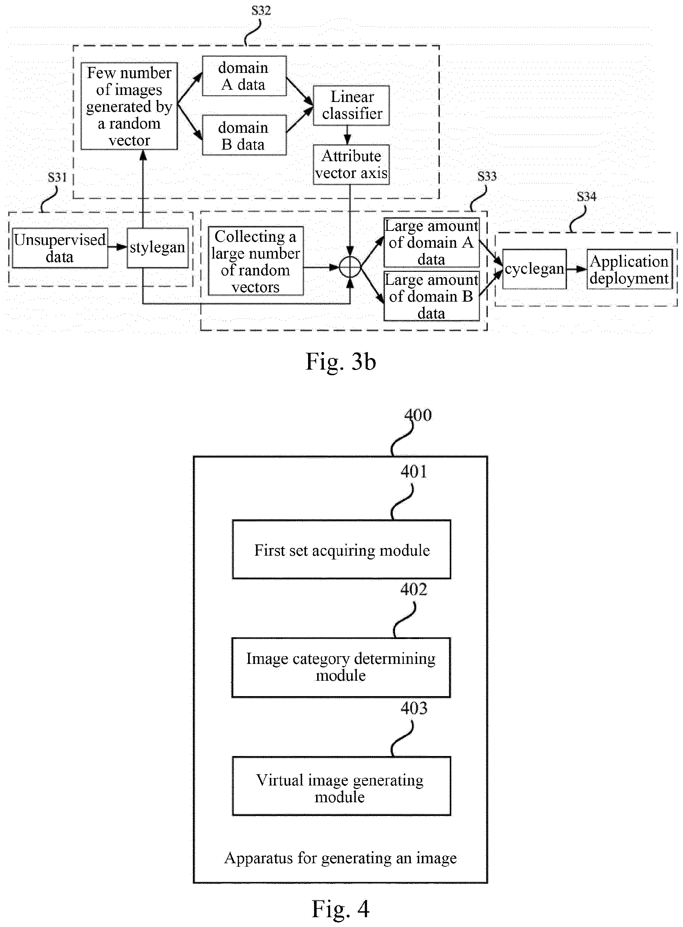

On the basis of the above embodiments, as shown in Fig. 3b, a flowchart of an acquisition of a trained image-to-image translation model is provided, and the acquisition specifically includes the following steps. In S31, a large number of unsupervised high-definition face data training stylegan models are acquired. In S32, a random vector is sampled based on a trained stylegan model, to generate a few number of image samples, then the image samples are manually labeled with classification labels to obtain domain A data and domain B data, and a linear classifier is trained according to the obtained two groups of data. A normal vector of a classification plane determined by the converged linear classifier is an attribute vector axis in a stylegan space. In S33, after the attribute vector axis and the classifier are obtained, a large number of random vectors are sampled and acquired, and the categories (A or B) of the random vectors are determined by the linear classifier. If the category of a random vector is A, the random vector is edited to B according to the attribute vector axis to generate a new random vector, and vice versa. Then, the random vectors of the two image categories are inputted into the stylegan, and a high-definition dual-domain data set of which the numbers of the two domains are basically the same may be obtained. In S34, a cyclegan model is trained using the obtained high-definition dual-domain data set, to obtain a non-paired image-to-image translation model, and an application deployment is performed.

According to the above training method, a large amount of manual labeling is no longer required for face attribute data. Thus, the cost of the data labeling may be greatly reduced, and at the same time, the training process is simple, the processing steps are few, and the model research and development efficiency is high. In addition, the model trained using this method is very easy to be converged and has good generalization performance. Since the quality of the data generated by the stylegan is high, the image translation effect of the image-to-image translation model trained using the virtual image generated by the stylegan is also better.

According to an embodiment of the present disclosure, the present disclosure further provides an apparatus for generating an image.

As shown in Fig. 4, Fig. 4 is a schematic structural diagram of an apparatus for generating an image according to an embodiment of the present disclosure. The apparatus is implemented by means of software and/or hardware, and perform the method for generating an image as described in any of the embodiments of the present disclosure. Specifically, the apparatus 400 for generating an image includes: a first set acquiring module 401, an image category determining module 402 and a virtual image generating module 403.

Here, the first set acquiring module 401 is configured to acquire a first random vector set.

The image category determining module 402 is configured to determine an image category to which at least one random vector in the first random vector set belongs, based on a trained classifier.

The virtual image generating module 403 is configured to input a random vector belonging to the image category into a trained image generator to generate a virtual image belonging to the image category.

Alternatively, the apparatus 400 for generating an image may further include:

an image category editing module, configured to edit, before the random vector belonging to the image category is inputted into the trained image generator to generate the virtual image belonging to the image category, the at least one random vector in the first random vector set from the image category to which the at least one random vector belongs to another image category other than the image category, to obtain other random vector belonging to the another image category.

Here, alternatively, the image category editing module may specifically include:
a vector axis acquiring unit, configured to acquire an attribute vector axis of an image category space corresponding to the image generator, the attribute vector axis referring to a normal vector of a classification plane corresponding to any two image categories in the image category space; and
a category editing unit, configured to edit, according to the attribute vector axis, the at least one random vector in the first random vector set from the image category to which the at least one random vector belongs to another image category other than the image category to obtain other random vector belonging to the another image category.

Here, alternatively, the category editing unit may specifically include:
a first editing subunit, configured to add a product of the attribute vector axis and an edit scale parameter to a random vector belonging to a first image category, to obtain a random vector belonging to a second image category; and/or
a second editing subunit, configured to subtract the product of the attribute vector axis and the edit scale parameter from the random vector belonging to the second image category, to obtain the random vector belonging to the first image category.

Here, the attribute vector axis is pointed from an image category space corresponding to the first image category to an image category space corresponding to the second image category.

The aparatus 400 for generating an image further includes:
a second set acquiring module, configured to acquire a second random vector set;
a to-be-labeled image generating module, configured to input at least one random vector in the second random vector set into the trained image generator to generate at least one to-be-labeled virtual image;
an image classifying and labeling module, configured to classify and label the random vector according to the to-be-labeled virtual image and a preset image category, to obtain a random vector sample having a classification label; and
a classification model training module, configured to train a preset classification model using the random vector sample having the classification label, to obtain the trained classifier.

Alternatively, a number of random vectors in the first random vector set is greater than a number of random vectors in the second random vector set.

Alternatively, the apparatus 400 for generating an image may further include:
a sample image acquiring module, configured to acquire a sample image data set, the sample image data set including a plurality of real images having no classification label; and
a generator training module, configured to perform unsupervised training on a first generative adversarial network using the sample image data set to obtain the trained image generator.

Alternatively, the apparatus 400 for generating an image may further include:
a virtual image labeling module, configured to label, after the random vector belonging to the image category is inputted into the trained image generator to generate the virtual image belonging to the image category, the virtual image according to the image category to which the virtual image belongs, to generate a virtual image sample having a classification label;
a translation model training module, configured to perform supervised training on a second generative adversarial network using the virtual image sample, to obtain a trained image-to-image translation model, the image-to-image translation model being configured for translating an inputted image from an image category to which the inputted image belongs into an image of another image category.

The apparatus for generating an image provided in the embodiment of the present disclosure performs the method for generating an image provided in any of the embodiments of the present disclosure, and possess functional modules for performing the method and corresponding beneficial effects.

According to an embodiment of the present disclosure, the present disclosure further provides an electronic device and a readable storage medium.

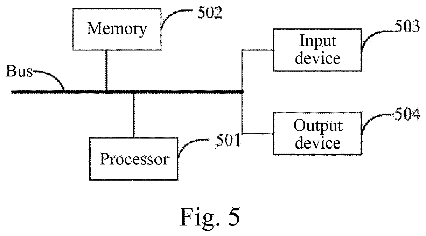

As shown in Fig. 5, Fig. 5 is a block diagram of an electronic device of a method for generating an image according to embodiments of the present disclosure. The electronic device is intended to represent various forms of digital computers such as a laptop computer, a desktop computer, a workstation, a personal digital assistant, a server, a blade server, a mainframe computer, and other appropriate computers. The electronic device may also represent various forms of mobile apparatuses such as personal digital processing, a cellular telephone, a smart phone, a wearable device and other similar computing apparatuses. The parts shown herein, their connections and relationships, and their functions are only as examples, and not intended to limit implementations of the present disclosure as described and/or claimed herein.

As shown in Fig. 5, the electronic device includes one or more processors 501, a memory 502, and interfaces for connecting components, including a high-speed interface and a low-speed interface. The components are interconnected by using different buses and may be mounted on a common motherboard or otherwise as required. The processor may process instructions executed within the electronic device, including instructions stored in memory or on memory to display graphical information of the GUI on an external input or output device (such as a display device coupled to an interface). In other embodiments, multiple processors and/or multiple buses and multiple memories may be used with multiple memories, if required. Similarly, multiple electronic devices may be connected (for example, used as a server array, a set of blade servers or a multiprocessor system), and each electronic device provides some of the necessary operations. An example of a processor 501 is shown in Fig. 5.

The memory 502 is a non-transitory computer readable storage medium according to the present disclosure. The memory stores instructions executable by at least one processor to cause the at least one processor to execute the method for improving the model based on the pre-trained semantic model according to the present disclosure. The non-transitory computer readable storage medium of the present disclosure stores computer instructions for causing a computer to execute the method for generating an image.

As a non-transitory computer readable storage medium, the memory 502 stores non-transitory software programs, non-transitory computer executable programs and modules, such as the program instructions or modules corresponding to the method for improving the model based on the pre-trained semantic model in the embodiment of the present disclosure (such as the first set acquiring module 401, the image category determining module 402 and the virtual image generating module 403 shown in Fig. 4). The processor 501 runs the non-transitory software programs, instructions and modules stored in the memory 502 to execute various functional applications and data processing of the server, thereby implementing the method for generating an image in the method embodiment.

The memory 502 may include a storage program area and a storage data area, where the storage program area may store an operating system and an application program required by at least one function; and the storage data area may store data created by the electronic device when executing the method for improving the model based on the pre-trained semantic model. In addition, the memory 502 may include a high-speed random access memory, and may further include a non-transitory memory, such as at least one magnetic disk storage device, a flash memory or other non-transitory solid state storage devices. In some embodiments, the memory 502 may alternatively include a memory disposed remotely relative to the processor 501, which may be connected through a network to the electronic device adapted to execute the method for improving the model based on the pre-trained semantic model. Examples of such networks include, but are not limited to, the Internet, enterprise intranets, local area networks, mobile communication networks and combinations thereof.

The electronic device adapted to execute the method for generating an image may further include an input device 503 and an output device 504. The processor 501, the memory 502, the input device 503 and the output device 504 may be interconnected through a bus or other means, and an example of a connection through a bus is shown in Fig. 5.

The input device 503 may receive input number or character information, and generate key signal input related to user settings and functional control of the electronic device adapted to execute the method for improving the model based on the pre-trained semantic model, such as a touch screen, a keypad, a mouse, a track pad, a touch pad, a pointer bar, one or more mouse buttons, a trackball or a joystick. The output device 504 may include a display device, an auxiliary lighting device (such as an LED) and a tactile feedback device (such as a vibration motor). The display device may include, but is not limited to, a liquid crystal display (LCD), a light emitting diode (LED) display and a plasma display. In some embodiments, the display device may be a touch screen.

The various embodiments of the systems and technologies described herein may be implemented in digital electronic circuit systems, integrated circuit systems, ASICs (application specific integrated circuits), computer hardware, firmware, software and/or combinations thereof. The various embodiments may include: being implemented in one or more computer programs, where the one or more computer programs may be executed and/or interpreted on a programmable system including at least one programmable processor, and the programmable processor may be a dedicated or general-purpose programmable processor, which may receive data and instructions from a memory system, at least one input device and at least one output device, and send the data and instructions to the memory system, the at least one input device and the at least one output device.

These computing programs (also known as programs, software, software applications or code) include machine instructions of a programmable processor and may be implemented in high-level procedures and/or object-oriented programming languages, and/or assembly or machine languages. As used herein, the terms "machine readable medium" and "computer readable medium" refer to any computer program product, device and/or apparatus (such as magnetic disk, optical disk, memory and programmable logic device (PLD)) for providing machine instructions and/or data to a programmable processor, including a machine readable medium that receives machine instructions as machine readable signals. The term "machine readable signal" refers to any signal used to provide machine instructions and/or data to a programmable processor.

To provide interaction with a user, the systems and technologies described herein may be implemented on a computer having: a display device (such as a CRT (cathode ray tube) or LCD (liquid crystal display) monitor) for displaying information to the user; and a keyboard and a pointing device (such as a mouse or a trackball) through which the user may provide input to the computer. Other types of devices may also be used to provide interaction with the user. For example, the feedback provided to the user may be any form of sensory feedback (such as visual feedback, auditory feedback or tactile feedback); and input from the user may be received in any form, including acoustic input, speech input or tactile input.

The systems and technologies described herein may be implemented in: a computing system including a background component (such as a data server), or a computing system including a middleware component (such as an application server), or a computing system including a front-end component (such as a user computer having a graphical user interface or a web browser through which the user may interact with the implementation of the systems and technologies described herein), or a computing system including any combination of such background component, middleware component or front-end component. The components of the system may be interconnected by any form or medium of digital data communication (such as a communication network). Examples of communication networks include a local area network (LAN), a wide area network (WAN) and the Internet.

The computer system may include a client and a server. The client and the server are generally remote from each other and interact generally through a communication network. The relationship between the client and the server is generated by running the computer programs having a client-server relationship with each other on the corresponding computer.

According to the technical solution in the embodiments of the present disclosure, a first random vector set is acquired. An image category to which at least one random vector in the first random vector set belongs is determined based on a trained classifier. A random vector belonging to the image category is inputted into a trained image generator to generate a virtual image belonging to the image category. The problem in the existing technology that it is difficult to acquire an image that is clearly classified is solved by using the advantage of using the classifier and the image generator together. Accordingly, the automatic generation of a large number of images that are clearly classified is implemented, and at the same time, the image diversity is improved and the cost of the image classification is reduced.

It should be appreciated that the steps of reordering, adding or deleting may be executed using the various forms shown above. For example, the steps described in the present disclosure may be executed in parallel or sequentially or in a different order, so long as the expected results of the technical solutions provided in the present disclosure may be realized, and no limitation is imposed herein.

## Claims

1. A computer-implemented method for generating a labelled image, comprising:
acquiring a first and second random vector set;
inputting at least one random vector in the second random vector set into a trained image generator to generate at least one to-be-labeled virtual image corresponding to the at least one random vector;
labeling the random vector corresponding to the to-be-labeled virtual image according to the image category to which the to-be-labeled virtual image belongs, to obtain a random vector sample having a classification label;
training a preset classification model using the random vector sample having the classification label, to obtain a trained classifier;
determining (S120) an image category to which at least one random vector in the first random vector set belongs, based on the trained classifier; and
inputting (S130) a random vector belonging to the image category into a trained image generator to generate a virtual image belonging to the image category.

2. The method according to claim 1, wherein before the inputting a random vector belonging to the image category into a trained image generator to generate a virtual image belonging to the image category, the method further comprises:
editing (S230) the at least one random vector in the first random vector set from the image category to which the at least one random vector belongs to another image category other than the image category to obtain other random vector belonging to the another image category.

3. The method according to claim 2, wherein the editing the at least one random vector in the first random vector set from the image category to which the at least one random vector belongs to another image category other than the image category to obtain other random vector belonging to the another image category comprises:
acquiring an attribute vector axis of an image category space corresponding to the image generator, the attribute vector axis being a normal vector of a classification plane corresponding to any two image categories in the image category space; and
editing, according to the attribute vector axis, the at least one random vector in the first random vector set from the image category to which the at least one random vector belongs to the another image category other than the image category to obtain the other random vector belonging to the another image category.

4. The method according to claim 3, wherein the editing, according to the attribute vector axis, the at least one random vector in the first random vector set from the image category to which the at least one random vector belongs to the another image category other than the image category to obtain the other random vector belonging to the another image category comprises:
adding a product of the attribute vector axis and an edit scale parameter to a random vector belonging to a first image category, to obtain a random vector belonging to a second image category; and/or
subtracting the product of the attribute vector axis and the edit scale parameter from the random vector belonging to the second image category, to obtain the random vector belonging to the first image category,
wherein the attribute vector axis is pointed from an image category space corresponding to the first image category to an image category space corresponding to the second image category.

5. The method according to claim 4, wherein a number of random vectors in the first random vector set is greater than a number of random vectors in the second random vector set.

6. The method according to any one of claims 1 to 5, further comprising:
acquiring a sample image data set, the sample image data set including a plurality of real images having no classification label; and
performing unsupervised training on a first generative adversarial network using the sample image data set to obtain the trained image generator.

7. The method according to any one of claims 1-6, wherein after the inputting a random vector belonging to the image category into a trained image generator to generate a virtual image belonging to the image category, the method further comprises:
labeling (S340) the virtual image according to the image category to which the virtual image belongs, to generate a virtual image sample having a classification label; and
performing (S350) supervised training on a second generative adversarial network using the virtual image sample, to obtain a trained image-to-image translation model, the image-to-image translation model being configured for translating an inputted image from an image category to which the inputted image belongs into an image of another image category.

8. An apparatus for generating a labelled image, comprising: modules for performing the method according to any one of claims 1 to 7.

9. A non-transitory computer readable storage medium, storing a computer instruction, wherein the computer instruction is used to cause the computer to perform the method according to any one of claims 1-7.

10. A computer program comprising instructions which, when the program is executed by a computer, cause the computer to perform the method according to any one of claims 1 to 7.

## Patentansprüche

1. Computerimplementiertes Verfahren zum Erzeugen eines beschrifteten Bildes, das Folgendes umfasst:
Erfassen eines ersten und zweiten Zufallsvektorsatzes;
Eingeben mindestens eines Zufallsvektors in dem zweiten Zufallsvektorsatz in einen geschulten Bilderzeuger, um mindestens ein zu beschriftendes virtuelles Bild zu erzeugen, das dem mindestens einen Zufallsvektor entspricht;
Beschriften des Zufallsvektors, der dem zu beschriftenden virtuellen Bild entspricht, gemäß der Bildkategorie, zu der das zu beschriftende virtuelle Bild gehört, um eine Zufallsvektorprobe mit einer Klassifizierungsbeschriftung zu erhalten;
Schulen eines voreingestellten Klassifizierungsmodells unter Verwenden der Zufallsvektorprobe mit der Klassifizierungsbeschriftung, um einen geschulten Klassifikator zu erhalten;
Bestimmen (S120) einer Bildkategorie, zu der mindestens ein Zufallsvektor in dem ersten Zufallsvektorsatz gehört, basierend auf dem geschulten Klassifikator; und
Eingeben (S130) eines Zufallsvektors, der zu der Bildkategorie gehört, in einen geschulten Bilderzeuger, um ein virtuelles Bild zu erzeugen, das zu der Bildkategorie gehört.

2. Verfahren nach Anspruch 1, wobei das Verfahren vor dem Eingeben eines Zufallsvektors, der zu der Bildkategorie gehört, in einen geschulten Bilderzeuger, um ein virtuelles Bild zu erzeugen, das zu der Bildkategorie gehört, ferner Folgendes umfasst:
Bearbeiten (S230) des mindestens einen Zufallsvektors in dem ersten Zufallsvektorsatz aus der Bildkategorie, zu der der mindestens eine Zufallsvektor gehört, zu einer anderen Bildkategorie als der Bildkategorie, um einen anderen Zufallsvektor zu erhalten, der zu der anderen Bildkategorie gehört.

3. Verfahren nach Anspruch 2, wobei das Bearbeiten des mindestens einen Zufallsvektors in dem ersten Zufallsvektorsatz aus der Bildkategorie, zu der der mindestens eine Zufallsvektor gehört, zu einer anderen Bildkategorie als der Bildkategorie, um einen anderen Zufallsvektor zu erhalten, der zu der anderen Bildkategorie gehört, Folgendes umfasst:
Erfassen einer Attributvektorsachse eines Bildkategorieraums, der dem Bilderzeuger entspricht, wobei die Attributvektorachse ein normaler Vektor einer Klassifizierungsebene ist, die zwei beliebigen Bildkategorien in dem Bildkategorieraum entspricht; und
Bearbeiten, gemäß der Attributvektorachse, des mindestens einen Zufallsvektors in dem ersten Zufallsvektorsatz aus der Bildkategorie, zu der der mindestens eine Zufallsvektor gehört, zu einer anderen Bildkategorie als der Bildkategorie, um den anderen Zufallsvektor zu erhalten, der zu der anderen Bildkategorie gehört.

4. Verfahren nach Anspruch 3, wobei das Bearbeiten gemäß der Attributvektorachse des mindestens einen Zufallsvektors in dem ersten Zufallsvektorsatz aus der Bildkategorie, zu der der mindestens eine Zufallsvektor gehört, zu einer anderen Bildkategorie als der Bildkategorie, um den anderen Zufallsvektor zu erhalten, der zu der anderen Bildkategorie gehört, Folgendes umfasst:
Hinzufügen eines Produkts aus der Attributvektorsachse und einem Bearbeitungsskalenparameter zu einem Zufallsvektor, der zu einer ersten Bildkategorie gehört, um einen Zufallsvektor zu erhalten, der zu einer zweiten Bildkategorie gehört; und/oder
Subtrahieren des Produkts aus der Attributvektorsachse und dem Bearbeitungsskalenparameter von dem Zufallsvektor, der zu der zweiten Bildkategorie gehört, um den Zufallsvektor zu erhalten, der zu der ersten Bildkategorie gehört,
wobei die Attributvektorachse von einem Bildkategorieraum, der der ersten Bildkategorie entspricht, auf einen Bildkategorieraum zeigt, der der zweiten Bildkategorie entspricht.

5. Verfahren nach Anspruch 4, wobei eine Anzahl von Zufallsvektoren in dem ersten Zufallsvektorsatz größer als eine Anzahl von Zufallsvektoren in dem zweiten Zufallsvektorsatz ist.

6. Verfahren nach einem der Ansprüche 1 bis 5, das ferner Folgendes umfasst:
Erfassen eines Beispielbilddatensatzes, wobei der Beispielbilddatensatz eine Vielzahl von realen Bildern ohne Klassifizierungsbeschriftung enthält; und
Ausführen einer unbeaufsichtigten Schulung in einem ersten generativen kontradiktorischen Netzwerk unter Verwenden des Beispielbilddatensatzes, um den geschulten Bilderzeuger zu erhalten.

7. Verfahren nach einem der Ansprüche 1-6, wobei das Verfahren nach dem Eingeben eines Zufallsvektors, der zu der Bildkategorie gehört, in einen geschulten Bilderzeuger, um ein virtuelles Bild zu erzeugen, das zu der Bildkategorie gehört, ferner Folgendes umfasst:
Beschriften (S340) des virtuellen Bildes gemäß der Bildkategorie, zu der das virtuelle Bild gehört, um ein virtuelles Bildbeispiel mit einer Klassifizierungsbeschriftung zu erzeugen; und
Ausführen (S350) einer beaufsichtigten Schulung in einem zweiten generativen kontradiktorischen Netzwerk unter Verwenden des virtuellen Bildbeispiels, um ein geschultes Bild-zu-Bild-Übertragungsmodell zu erhalten, wobei das Bild-zu-Bild-Übertragungsmodell konfiguriert ist, um ein eingegebenes Bild aus einer Bildkategorie, zu der das eingegebene Bild gehört, in ein Bild einer anderen Bildkategorie zu übertragen.

8. Vorrichtung zum Erzeugen eines beschrifteten Bildes, die Folgendes umfasst:
Module zum Ausführen des Verfahrens nach einem der Ansprüche 1 bis 7.

9. Nichtflüchtiges computerlesbares Speichermedium, das eine Computeranweisung speichert, wobei die Computeranweisung verwendet wird, um den Computer zu veranlassen, das Verfahren nach einem der Ansprüche 1-7 auszuführen.

10. Computerprogramm, das Anweisungen umfasst, die, wenn das Programm von einem Computer ausgeführt wird, den Computer veranlassen, das Verfahren nach einem der Ansprüche 1 bis 7 auszuführen.

## Revendications

1. Procédé mis en oeuvre par ordinateur de génération d'une image étiquetée, comprenant :
acquérir un premier et un deuxième ensemble de vecteurs aléatoires ;
entrer au moins un vecteur aléatoire dans le deuxième ensemble de vecteurs aléatoires dans un générateur d'images entraîné pour générer au moins une image virtuelle à étiqueter correspondant à l'au moins un vecteur aléatoire ;
étiqueter le vecteur aléatoire correspondant à l'image virtuelle à étiqueter selon la catégorie d'images à laquelle appartient l'image virtuelle à étiqueter, pour obtenir un échantillon de vecteur aléatoire ayant une étiquette de classification;
entraîner un modèle de classification prédéfini utilisant l'échantillon de vecteur aléatoire ayant l'étiquette de classification, pour obtenir un classificateur entraîné ;
déterminer (S120) une catégorie d'images à laquelle au moins un vecteur aléatoire appartient dans le premier ensemble de vecteurs aléatoires, sur la base du classificateur entraîné; et
entrer (S130) un vecteur aléatoire appartenant à la catégorie d'images dans un générateur d'images entraîné pour générer une image virtuelle appartenant à la catégorie d'images.

2. Procédé selon la revendication 1, où avant l'entrée d'un vecteur aléatoire appartenant à la catégorie d'images dans un générateur d'images entraîné pour générer une image virtuelle appartenant à la catégorie d'images, le procédé comprend en outre:
éditer (S230) l'au moins un vecteur aléatoire dans le premier ensemble de vecteurs aléatoires de la catégorie d'images à laquelle l'au moins un vecteur aléatoire appartient à une autre catégorie d'images autre que la catégorie d'images pour obtenir un autre vecteur aléatoire appartenant à l'autre catégorie d'images.

3. Procédé selon la revendication 2, où l'édition de l'au moins un vecteur aléatoire dans le premier ensemble de vecteurs aléatoires de la catégorie d'images à laquelle l'au moins un vecteur aléatoire appartient à une autre catégorie d'images autre que la catégorie d'images pour obtenir un autre vecteur aléatoire appartenant à l'autre catégorie d'images comprend :
acquérir un axe de vecteur d'attribut d'un espace de catégorie d'images correspondant au générateur d'images, l'axe de vecteur d'attribut étant un vecteur normal d'un plan de classification correspondant à deux catégories d'images quelconques dans l'espace de catégorie d'images ; et
éditer, selon l'axe de vecteur d'attribut, l'au moins un vecteur aléatoire dans le premier ensemble de vecteurs aléatoires de la catégorie d'images à laquelle l'au moins un vecteur aléatoire appartient à l'autre catégorie d'images autre que la catégorie d'images pour obtenir l'autre vecteur aléatoire appartenant à l'autre catégorie d'images.

4. Procédé selon la revendication 3, où l'édition, selon l'axe de vecteur d'attribut, de l'au moins un vecteur aléatoire dans le premier ensemble de vecteurs aléatoires de la catégorie d'images à laquelle l'au moins un vecteur aléatoire appartient à l'autre catégorie d'images autre que la catégorie d'images pour obtenir l'autre vecteur aléatoire appartenant à l'autre catégorie d'images comprend :
ajouter un produit de l'axe de vecteur d'attribut et un paramètre d'échelle d'édition à un vecteur aléatoire appartenant à une première catégorie d'images, pour obtenir un vecteur aléatoire appartenant à une deuxième catégorie d'images ; et/ou
soustraire le produit de l'axe de vecteur d'attribut et du paramètre d'échelle d'édition du vecteur aléatoire appartenant à la deuxième catégorie d'images, pour obtenir le vecteur aléatoire appartenant à la première catégorie d'images,
où l'axe de vecteur d'attributs est pointé d'un espace de catégorie d'images correspondant à la première catégorie d'images à un espace de catégorie d'images correspondant à la deuxième catégorie d'images.

5. Procédé selon la revendication 4, où un nombre de vecteurs aléatoires dans le premier ensemble de vecteurs aléatoires est supérieur à un nombre de vecteurs aléatoires dans le deuxième ensemble de vecteurs aléatoires.

6. Procédé selon l'une quelconque des revendications 1 à 5, comprenant en outre
acquérir un ensemble de données d'images d'échantillon, l'ensemble de données d'images d'échantillon incluant une pluralité d'images réelles n'ayant pas d'étiquette de classification; et
effectuer un entraînement non supervisé sur un premier réseau antagoniste génératif utilisant l'ensemble de données d'images d'échantillon pour obtenir le générateur d'images entraîné.

7. Procédé selon l'une quelconque des revendications 1 à 6, où après l'entrée d'un vecteur aléatoire appartenant à la catégorie d'images dans un générateur d'images entraîné pour générer une image virtuelle appartenant à la catégorie d'images, le procédé comprend en outre:
étiqueter (S340) l'image virtuelle selon la catégorie d'images à laquelle l'image virtuelle appartient, pour générer un échantillon d'image virtuelle ayant une étiquette de classification; et
effectuer (S350) un entrainement supervisé sur un deuxième réseau antagoniste génératif utilisant l'échantillon d'image virtuelle, pour obtenir un modèle de traduction image à image entraîné, le modèle de traduction image à image étant configuré pour traduire une image entrée d'une catégorie d'images à laquelle l'image entrée appartient en une image d'une autre catégorie d'images.

8. Appareil de génération d'une image étiquetée, comprenant :
des modules pour effectuer la méthode selon l'une quelconque des revendications 1 à 7.

9. Support de stockage non transitoire lisible par ordinateur, stockant une instruction informatique,
où l'instruction informatique est utilisée pour amener l'ordinateur à effectuer le procédé selon l'une quelconque des revendications 1 à 7.

10. Programme informatique comprenant des instructions qui, lorsque le programme est exécuté par un ordinateur, amènent l'ordinateur à effectuer le procédé selon l'une quelconque des revendications 1 à 7.
